# FASCICULE DE BREVET EUROPEEN

(11) **EP 2 493 282 B1**
(45) Date de publication et mention de la délivrance du brevet: **02.04.2014**
(21) Numéro de dépôt: 10787856.3
(22) Date de dépôt: 27.10.2010
(51) Int. Cl.: A01G 9/02, A01G 1/00

(54) **DISPOSITIF POUR UN AGENCEMENT VERTICAL OU INCLINÉ DE CULTURE HORS SOL DE VÉGÉTAUX**
VORRICHTUNG ZUR VERTIKALEN ODER WINKELIGEN ANORDNUNG VON HYDROKULTURPFLANZEN
DEVICE FOR A VERTICAL OR ANGLED ARRANGEMENT OF THE HYDROPONIC CULTIVATION OF PLANTS

(30) Priorité: 30.10.2009 FR 0957705
(43) Date de publication de la demande: 05.09.2012
(73) Titulaire: Modulogreen Vertical Solutions, 5000-608 Vila Real (PT)
(72) Inventeur: DOS SANTOS, José, F-91630 Avrainville (FR)
(74) Mandataire: Thinat, Michel
(86) Numéro de dépôt international: PCT/FR2010/052298
(87) Numéro de publication internationale: WO 2011/051619

(56) Documents cités:
- WO-A1-2009/098762
- FR-A1- 2 906 822
- FR-A1- 2 926 952
- JP-A- 2004 337 054
- US-A1- 2007 079 553

## Description

La présente invention est relative à un dispositif pour un agencement vertical ou incliné de culture hors sol de végétaux.

Un exemple de dispositif pour un agencement vertical de culture hors sol de végétaux est connu du document FR-A-2 902 602. Dans ce document, le dispositif reçoit un substrat nutritif disposé verticalement, dans lequel les végétaux sont implantés horizontalement. Cette disposition pose des problèmes de croissance aux végétaux car normalement, leurs tiges et leurs racines doivent être plantées sensiblement verticalement pour un bon fonctionnement de la photosynthèse. En outre lorsque l'on plante les végétaux, il est difficile de ne pas perdre du substrat nutritif car il n'y a pas de paroi sensiblement verticale pour retenir le substrat. De plus, la fixation de ce type de dispositif est difficile car les moyens de fixation sont soumis à la corrosion favorisée par les engrais et l'irrigation des végétaux, le ruissellement des eaux d'irrigation sur les moyens de fixation étant difficile à éviter. On connait aussi un exemple de ces dispositifs du document WO - A 2009 098 762.

La présente invention a notamment pour but de remédier aux inconvénients de l'art antérieur.

A cet effet, l'invention a pour objet un dispositif pour un agencement vertical ou incliné de culture hors sol de végétaux, comprenant au moins un module déterminant un volume interne destiné à recevoir au moins un substrat nutritif et des végétaux et délimité par une paroi avant et une paroi arrière solidaire de la paroi avant, au moins la paroi avant étant pourvue d'au moins une ouverture pour le passage des végétaux et au moins l'une des parois avant et arrière comportant une zone de fixation prévue pour la fixation du module à un support. Dans ce dispositif, au moins l'une parmi la paroi avant et la paroi arrière comporte des bords de chevauchement permettant, lorsque le dispositif est installé en toiture végétale ou en mur végétal comportant au moins deux modules adjacents, que les modules se chevauchent au moins partiellement dans la toiture ou le mur.

Dans divers modes de réalisation du dispositif selon l'invention, on peut éventuellement avoir recours en outre à l'une et/ou à l'autre des dispositions suivantes :
- une évacuation d'eau débouche à une partie inférieure du volume interne ;
- l'évacuation d'eau se prolonge dans le bord inférieur du module, le bord inférieur comportant à cet effet au moins une entaille avant ;
- l'évacuation d'eau est une fente entre la paroi avant et la paroi arrière ;
- une gouttière est prévue pour la récupération de l'eau passant par l'évacuation d'eau ;
- la gouttière est intégrée dans le bord inférieur par un étagement approprié du bord inférieur de la paroi avant ;
- un orifice d'arrivée d'eau est prévu entre la paroi avant et la paroi arrière ;
- le dispositif selon l'invention est adapté à être installé en toiture végétale ou en mur végétal et peut comporter au moins deux modules adjacents se chevauchant au moins partiellement dans la toiture ou le mur, au moins l'une parmi la paroi avant et la paroi arrière comportant des bords de chevauchement ;
- la paroi arrière comporte des butées verticales en saillie vers l'avant pour permettre l'appui d'un bord inférieur d'un module disposé adjacent vers le haut ;
- les bords de la paroi avant et les bords de la paroi arrière sont solidaires et constituent la zone de fixation du module ;
- une réserve d'eau est disposée entre la paroi avant et la paroi arrière ;
- la réserve d'eau est constitué par un réservoir amovible ;
- la paroi avant comporte au moins une partie sensiblement horizontale délimitant l'ouverture ;
- la paroi avant comporte une partie inclinée raccordée à l'avant de la partie horizontale et s'étendant vers le bas et vers l'arrière ;
- le dispositif comporte une ouverture d'entrée d'eau entre la paroi avant et la paroi arrière ;
- la paroi arrière comporte une nervure de cloisonnement ou de retenue d'eau sensiblement horizontale, en saillie dans le volume interne ;
- la nervure de cloisonnement est disposée légèrement en-dessous du bord inférieur de l'ouverture ;
- la zone de fixation est sur au moins une partie de la périphérie du module, sur le pourtour du volume interne ;
- la paroi arrière comporte des butées verticales en saillie vers l'avant pour permettre l'appui d'un bord inférieur d'un module disposé adjacent vers le haut ;
- le dispositif comprend un support déplaçable et est pourvu de moyens de liaisons latéraux adaptés pour pouvoir former des liaisons articulées lorsque deux modules ou ensembles de modules sont assemblés horizontalement.

D'autres buts, caractéristiques et avantages de l'invention apparaîtront au cours de la description suivante de plusieurs modes de réalisation, donnés à titre d'exemples non limitatifs, en regard des dessins joints.

Sur les dessins :
- la figure 1 est une vue schématique de côté d'un premier mode de réalisation d'un dispositif selon l'invention, installé verticalement sur un mur de bâtiment ;
- la figure 2 est un dessin technique en perspective de trois quarts face d'une paroi avant du module du dispositif de la figure 1 ;
- la figure 3 est un dessin technique en perspective de trois quarts face d'une paroi arrière du module du dispositif de la figure 1 ;
- la figure 4 est une vue schématique de dessus du dispositif de la figure 1, installé sur le mur ;
- la figure 5 est un dessin technique en vue de dessous du dispositif de la figure 1, non installé sur le mur ;
- la figure 6 est un dessin technique en perspective de trois quarts face d'une paroi avant d'une variante de réalisation du module du dispositif de la figure 1 ;
- la figure 7 est un dessin technique en perspective de trois quarts face d'une paroi arrière du module de la figure 6 ;
- les figures 8, 9, 10 et 11 sont des dessins techniques du module des figures 6 et 7, respectivement en vue de face, de dessus, de dessous et de côté ;
- la figure 12 est une coupe verticale selon la ligne XII-XII de la figure 8 ;
- les figures 13, 14 et 15 sont des dessins techniques d'un dispositif d'une pluralité de modules des figures 6 et 7, respectivement en vue de face, de dessus et de côté ;
- les figures 16 et 17 sont des coupes d"une variante de réalisation du module des figures 8 à 11 ;
- les figures 18A, 18B, 18C, 18D, 18E et 18F sont des dessins techniques d'une gouttière du dispositif selon l'invention, respectivement en vue de côté, éclatée en perspective de trois quarts face, assemblée en perspective de trois quarts face, de face assemblée à un module conforme à la figure 8, de dessus et de dessous ;
- les figures 19, 20, 21 et 22 sont des dessins techniques d'un troisième mode de réalisation du dispositif selon l'invention ayant une pluralité de modules triangulaires, respectivement en vue éclatée en perspective, assemblé de face, de dessus et de côté ;
- les figures 23 à 27 sont des vues schématiques d'autres modes de réalisations de dispositif selon l'invention, principalement destinés à une utilisation à l'intérieur d'un bâtiment ;
- les figures 28A, 29A et 30A d'une part et les figures à 28B, 29B et 30B d'autre part, représentent, respectivement en des vues de dessus et des vues de face, des variantes de supports pour les dispositifs de l'invention,
- la figure 31 représente une variante de la disposition du tuyau d'arrosage,
- les figures 32A, 32B et 32C représentent, respectivement en une coupe, en une vue de dessus et en une vue de face, une autre variante de réalisation des moyens d'alimentation en eau du dispositif de l'invention ;
- la figure 33 est une vue en perspective d'un réservoir d'eau ;
- les figures 34A, 34B représentent, respectivement en une vue latérale et en une vue de face, une variante de réalisation d'une gouttière ;
- les figures 35 à 37 représentent des dispositifs de l'invention en tant que séparateurs d'espace ; et
- les figures 38A, 38B représentent, respectivement en une vue de face et en une vue latérale, un dispositif de l'invention en tant que décoration d'entrée.

Sur les différentes figures, les mêmes références désignent des éléments identiques ou similaires.

En se reportant aux figures, la référence 10 désigne un dispositif selon l'invention pour un agencement vertical ou incliné de culture hors sol de végétaux, afin de constituer respectivement un mur végétal ou une toiture végétale.

Dans la description qui va suivre, la direction verticale désignée V s'entend en considérant le dispositif dans une position de montage dans laquelle il est en service pour constituer le mur végétal ou la toiture végétale. La direction horizontale désignée L est suivant la longueur du dispositif et la direction horizontale désignée T est suivant la largeur du dispositif. Pour les modules destinés à être fixés sur un support surfacique, par exemple sur un mur, l'avant est du côté ornementé du mur végétal, correspondant à la face visible du mur recouvert par les végétaux, et l'arrière est du côté non ornementé du mur végétal, donc en regard du support. Et pour les modules destinés à être utilisés comme éléments de séparation ayant deux faces opposées ornementées, l'avant est indifféremment l'un ou l'autre côté ornementé et l'arrière est le second côté ornementé.

Le dispositif 10 comporte au moins un module 12 déterminant un volume interne 14 destiné à recevoir au moins un substrat nutritif et des végétaux 16, en l'espèce leur racine et la partie basse de leur tige. Dans la pratique, le dispositif 10 comporte une pluralité de modules 12 fixés sur des supports verticaux 18 solidaires d'un mur 20 ou d'une charpente.

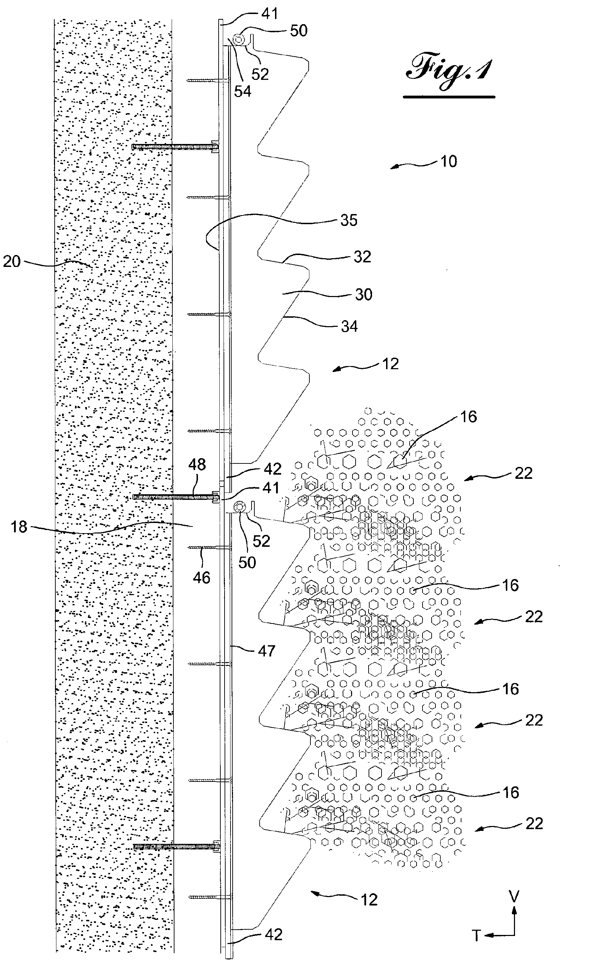

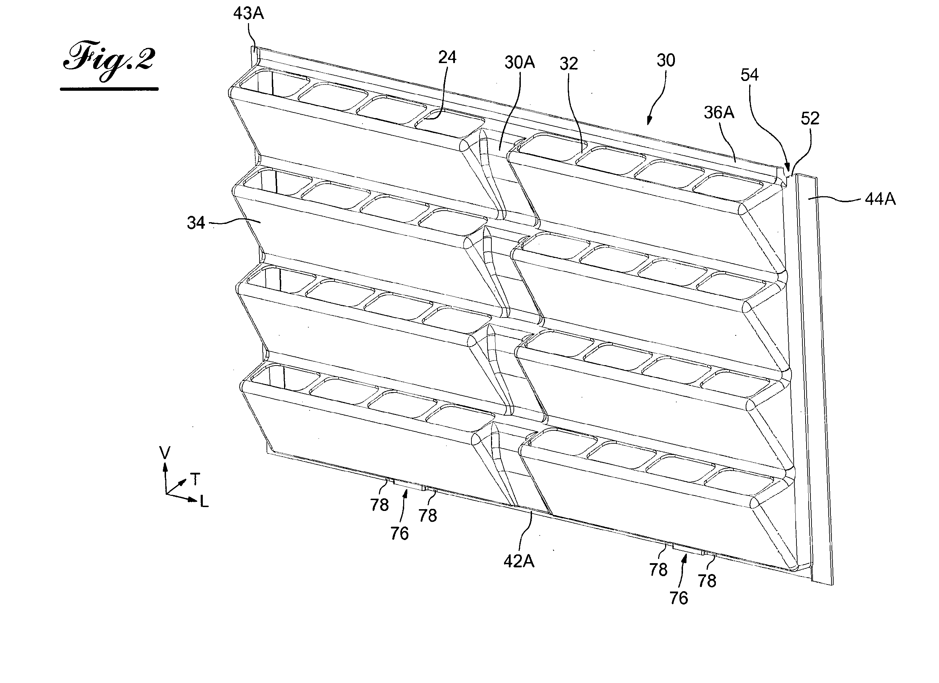

Dans le premier mode de réalisation du dispositif 10 représenté aux figures 1 et 2, tel qu'installé vertical parallèlement au mur 20 de bâtiment, chaque module 12 fait environ 80 centimètres de haut et 130 centimètres de long. Le module 12 est prévu pour quatre rangées 22 horizontales de végétaux, réparties régulièrement sur la hauteur du module.

Les végétaux 16 ont des parties, en l'espèce des tiges et du feuillage, qui passent à travers au moins une ouverture 24, pour leur exposition à la lumière.

Tel que représenté aux figues 1 et 2, les rangées 22 peuvent chacune recevoir huit bottes de végétaux 16, chaque botte étant en correspondance d'une ouverture 24. Les ouvertures 24 sont réparties en deux groupes 24A de quatre.

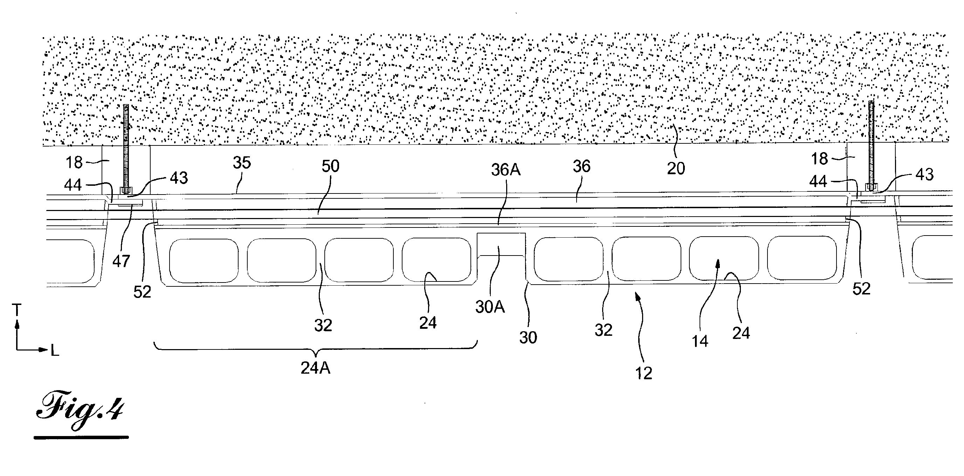

Le volume interne 14 (figure 4) est délimité d'une part par une paroi avant 30 pourvue des ouvertures 24 adaptées à être traversées par végétaux 16.

Chaque groupe 24A de quatre ouvertures 24 est aménagé dans une partie sensiblement horizontale 32 de la paroi avant 30, cette partie permettant de bien retenir le substrat nutritif lors des opérations de plantation des végétaux. Chaque partie sensiblement horizontale 32 est légèrement inclinée vers l'avant et vers le bas, par exemple de dix à vingt degrés. Cette légère inclinaison permet d'éviter la rétention d'eau et de feuilles mortes. Elle facilite la fabrication dans un moule de la paroi avant 30.

La paroi avant 30 comporte aussi une partie inclinée 34 raccordée à l'avant de chaque partie horizontale 32 et s'étendant vers le bas et vers l'arrière.

Le volume interne 14 est délimité d'autre part par une paroi arrière 35 solidaire de la paroi avant 30, lesdites parois 30 et 35 étant des pièces différentes.

Sur leur périphérie, la paroi avant 30 et la paroi arrière 35 sont solidarisées l'une à l'autre de manière étanche, par exemple par collage ou par soudage laser, de manière à éviter les fuites indésirables d'eau d'irrigation, d'engrais et de substrat nutritif.

Entre la paroi arrière 35, la partie sensiblement horizontale 32 et la partie inclinée 34 de la paroi avant 30, un étage du volume interne 14 de section sensiblement triangulaire correspond à chaque rangée 22 de végétaux 16, lesdits étages de volume interne 14 communiquant entre elles.

De plus, à la partie supérieure des parois et entre ces dernières, chaque module 12 comporte une ouverture ou fente d'entrée d'eau 36, visible à la figure 4. Un rebord supérieur 36A délimite l'avant de la fente 36 en étant aménagé verticalement au dessus de l'extrémité arrière de la plus haute des parties sensiblement horizontales 32 de la paroi avant 30.

Tel que représenté aux figures 1 et 4, comme les modules 12 sont prévus pour être installés adjacents les uns au dessus des autres et les uns à côté des autres pour former le mur végétal, les bords des modules 12 se chevauchent, par exemple sur trois centimètres, à la jonction des modules pour éviter les infiltrations d'eau vers l'arrière du dispositif 10 formant le mur végétal.

Ainsi, le bord supérieur 41 et le bord gauche 43 de chaque module 12 sont affleurant à la face arrière du module. Et le bord inférieur 42 et le bord droit 44 de chaque module 12 sont en saillie vers l'avant par rapport à la face arrière du module, la saillie étant au moins égale à l'épaisseur du bord supérieur 41 et du bord gauche 43. Les saillies résultent de décrochements 45 des bords correspondants. De ce fait, lorsque des modules 12 sont positionnés adjacents le long du mur 20, le bord droit 44 de l'un des modules 12 chevauche le bord gauche 43 du module latéralement adjacent et le bord inférieur 42 de l'un des modules 12 chevauche le bord supérieur 41 du module verticalement adjacent. L'eau peut ainsi difficilement s'infiltrer vers l'arrière des modules 12.

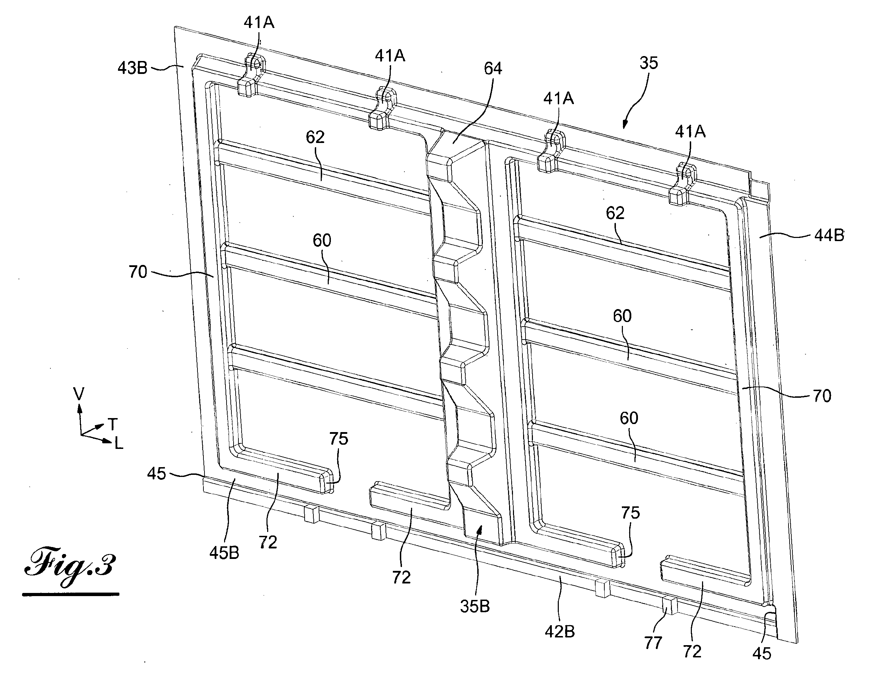

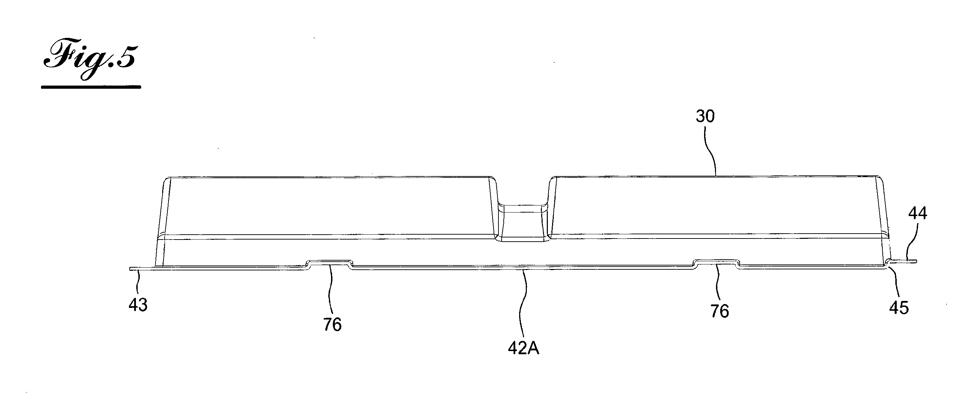

A la figure 5, par exemple, le décrochement 45 entre le bord droit 44 et le reste de la face arrière de la paroi arrière 35 est bien visible. D'autres décrochements 45 sont visibles à la figure 3, par exemple au dessus du bord inférieur 42B de la paroi arrière 35.

Comme représenté à la figure 3, la paroi arrière comporte des ergots de butée verticale 41A qui permettent de caler en hauteur deux modules adjacents verticalement, par appui du bord inférieur 42 du module supérieur sur les ergots de butée 41A du module inférieur. Cet aménagement permet d'éviter un mauvais chevauchement des bords des modules.

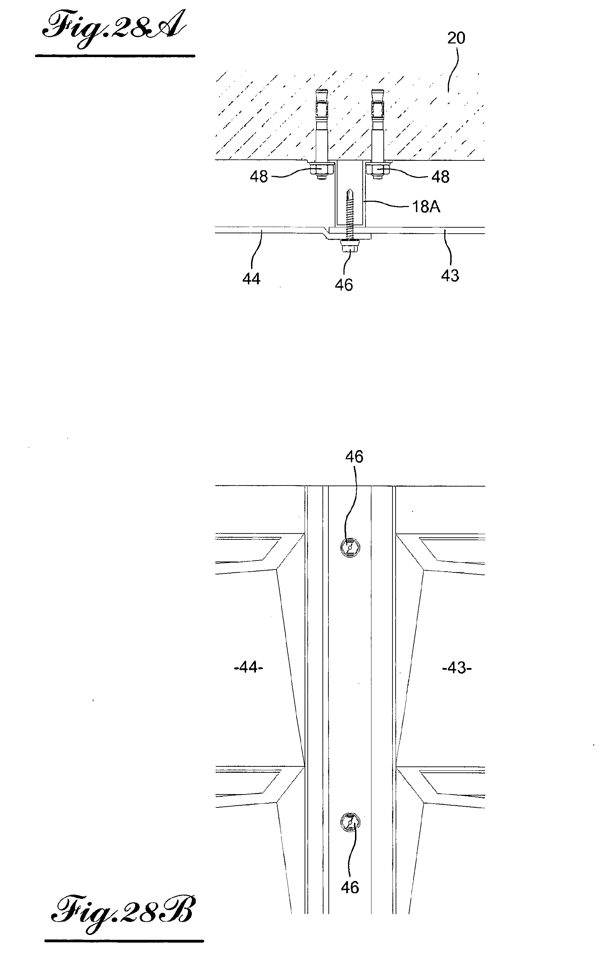

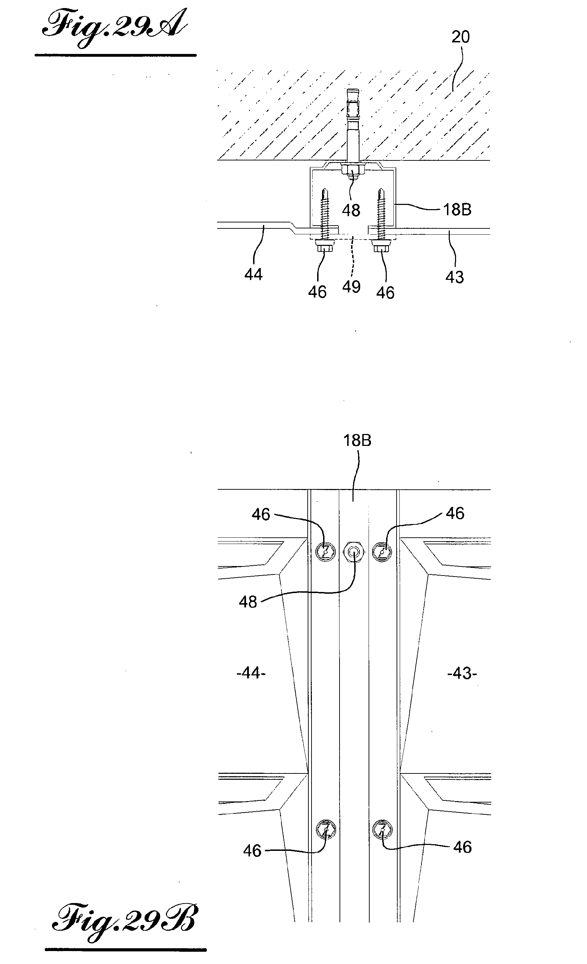

En outre, les bords verticaux 43 et 44 des modules 12 constituent des zones de fixation qui sont fixés aux supports 18, par exemple par des vis 46 (figure 1). Des plaquettes 47 servent de rondelle et d'habillage pour préserver les bords des modules. Les supports 18 sont ici constitués par des montants verticaux en bois, eux mêmes fixés au mur 20 par des vis 48. En variante, les supports sont des profilés métalliques 18A à section sensiblement en oméga (figures 28A, 28B) ou des profilés métalliques 18B à section rectangulaire ouverte (figures 29A, 29B), eux-mêmes fixés au mur 20 par des vis 48. On choisira la première variante lorsque les modules adjacents doivent être montés en chevauchement mais on choisira la deuxième variante lorsque les modules adjacents doivent être montés - pour quelle que raison que ce soit-latéralement espacés l'un de l'autre. Dans ce cas, la largeur du profilé 18B doit être déterminée en fonction de l'espacement recherché entre les modules. Facultativement, le profilé ouvert 18B peut être fermé par une plaque 49 représentée sur la figure 29A en traits interrompus.

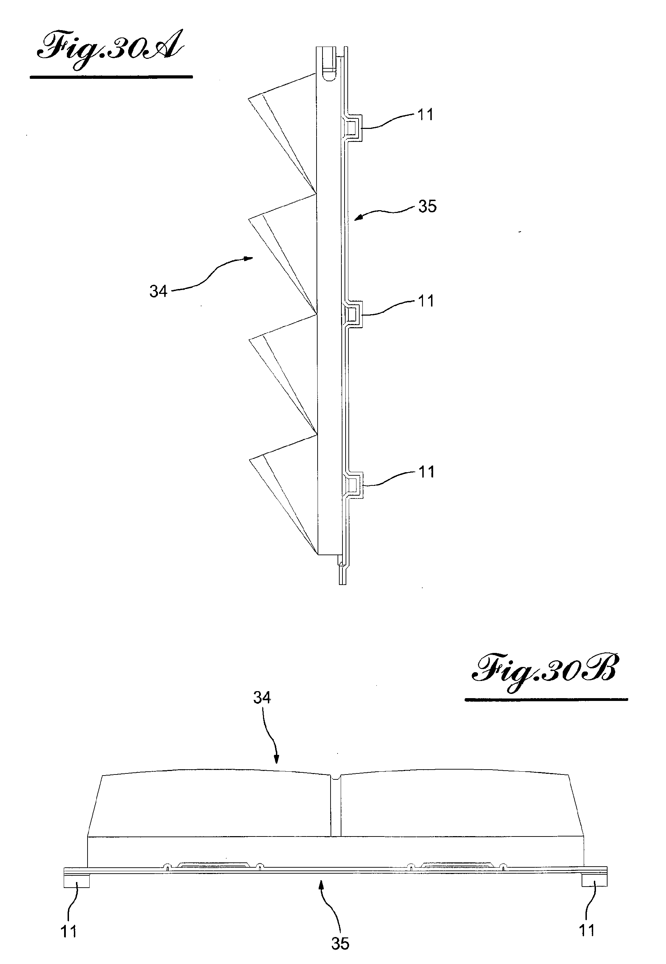

Selon une troisième variante, représentée sur les figures 30A, 30B, le support est intégré dans les modules. En effet, en formant dans les deux parois avant et arrière des plots de fixation 11 en saillie vers l'arrière des modules, les modules peuvent être fixés directement au mur 20 par des vis 48 tout en gardant un espace de ventilation naturelle entre le mur et les modules.

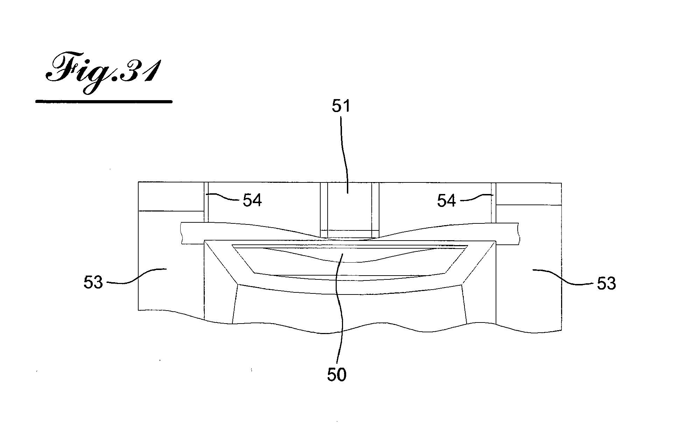

Le dispositif 10 comporte aussi un tuyau horizontal d'arrosage 50 par goutte à goutte, qui est disposé en regard de la fente 36 afin de distribuer de l'eau dans le volume intérieur 14 par ladite fente 36. Le tuyau 50 repose sur la tranche d'extrémité supérieure 52 des parois latérales de chaque module 12, en passant dans une encoche latérale 54 desdites parois. Selon une variante de réalisation représentée sur la figure 31, le tuyau 50 est dévié vers le bas par au moins un plot 51 situé entre la paroi avant 30 et la paroi arrière 35 à mi-chemin entre les encoches latérales 54 des parois latérales et formé par exemple de matière avec la paroi arrière 35. Grâce à la déviation vers le bas, les gouttes d'eau ne remontent pas vers les parois latérales du module 12. Aux extrémités gauche et droite du dispositif 10, des rampes verticales 53 sont raccordées aux tuyaux 50 par des raccords de type connus en eux-mêmes pour constituer le circuit d'eau qui comporte aussi une pompe et des filtres connus en eux-mêmes, le cas échéant reliés à un réservoir d'eau.

Comme représenté aux figures 2 à 5, chaque module comporte, outre la fente d'entrée d'eau 36, des aménagements pour gérer la circulation de l'eau dans le volume interne 14 et l'évacuation du surplus d'eau à travers le bord inférieur 42. Ces aménagements sont mis à profit pour favoriser la résistance mécanique des modules 12.

Pour contrôler le ruissellement interne de l'eau le long de la paroi arrière 35, cette dernière comporte des nervures horizontales de cloisonnement du volume interne 14, en saillie vers l'avant dans ce volume. Les nervures horizontales de cloisonnement sont référencées 60 à la figure 3. Chaque nervure de cloisonnement est disposée de manière à être en regard de l'arête d'extrémité arrière 32A de chaque partie sensiblement horizontale 32 de la paroi avant.

Dans le premier mode de réalisation de l'invention représenté aux figures 1 à 5, chaque nervure de cloisonnement 60 comporte une section sensiblement carrée et sa largeur est telle qu'elle n'entre pas en contact avec la paroi avant 30 pour ne pas cloisonner le volume interne 14, tout en autorisant le passage d'eau par ruissellement entre les étages correspondant aux rangées 22 de végétaux 16. Les nervures de cloisonnement 60 ralentissent par contre ce ruissellement. Elles comportent une face supérieure 62 inclinée vers l'avant et vers le bas, par exemple de quelques degrés.

Le module comporte une colonne centrale, entre les tronçons de partie horizontale 32 de la paroi avant 30 qui correspond aux groupes 24A d'ouvertures 24. Sur la paroi avant 30, la colonne centrale, référencée 30A aux figures 2 et 4, est constituée par des tronçons en retrait au niveau des parties horizontales 32 et des parties inclinées 34. Sur la paroi arrière 35, la colonne centrale, référencée 35B à la figure 3, est constituée par des bossages ayant une face supérieure 64 parallèle à la partie horizontale 32 de la paroi avant 30 et des faces inclinées parallèles aux tronçons en retrait au niveau des parties inclinées 34.

La paroi avant 30 et la paroi arrière 35 sont fixées, par exemple par soudage laser, respectivement aux tronçons en retrait et aux bossages de la colonne centrale. En outre, lesdites parois 30 et 35 sont fixées par la même technique respectivement à leur bords gauches avant 43A et 43B, leur bords droits avant 44A et 44B et à leurs bords inférieur 42A et 42B. Le bord inférieur 42A de la paroi avant 30 rentre dans l'espace 45B situé entre le bord inférieur 42B de la pièce paroi arrière 35 et une bordure horizontale interne 72.

Outre les nervures horizontales 60 qui cloisonnent le volume intérieur 14 du module, la paroi arrière 35 comporte au pourtour de ce volume 14, des nervures en saillie vers l'avant en constituant des bordures verticales internes 70, raccordées aux extrémités latérales des nervures horizontales de cloisonnement 60. La bordure sensiblement horizontale interne 72 est raccordée au bord inférieur 42B de la paroi arrière 35 et à ses extrémités latérales aux bordures verticales internes 70, aux angles inférieurs de la paroi arrière 35.

Des entailles arrière 75 sont creusées dans la bordure horizontale interne 72, à droite et à gauche à un quart de la longueur des modules 12 (figure 3). En correspondance, des entailles avant 76 sont creusées dans le bord inférieur 42A de la paroi avant 30, à droite et à gauche à un quart de la longueur des modules 12 (figure 5). Ces entailles 75 et 76 permettent de l'évacuation d'eau, par exemple lorsqu'il y a de la pluie provoquant un excès d'arrosage.

En complément des entailles 75 et 76, la paroi avant 30 et la paroi arrière 35 comportent respectivement des bosses 77 et des découpes 78 qui sont destinées à arrêter le ruissellement latéral de l'eau arrivant des entailles.

Dans le mode de réalisation décrit précédemment, les parois avant 30 et arrière 35 sont des pièces distinctes en polymère à base d'ABS (Acrylonitrile butadiène styrène) issues par exemple de thermoformage ou d'injection. En variante, notamment lorsque le module ne comprend qu'une seule rangée 22 de végétaux ou une seule place pour végétaux, lesdites parois peuvent êtres issues d'une même pièce obtenue par soufflage.

L'invention permet de disposer d'un mur végétal habillant un bâtiment, tout en améliorant son isolation thermique, et comportant les avantages suivants :
- solidité des modules qui se fixent de manière autonome, simplicité de fabrication, en particulier sans nécessiter de cadre intermédiaire de support ;
- étanchéité des modules ;
- contrôle des écoulements d'eau internes et des modules vers l'extérieur, bonne gestion de l'eau ;
- retenue des végétaux de par le positionnement sensiblement horizontal des ouvertures de passage des végétaux ;
- qualité et fiabilité de l'étanchéité entre les modules, par des recouvrements de bord de modules acceptant des dispersions sans risque de mauvais montage ;
- simplicité d'installation en pouvant compenser les irrégularités de planéité du mur du bâtiment ;
- aération entre l'arrière du mur végétal et le bâtiment pour éviter les problèmes de condensation, par l'utilisation des montants de support ;
- facilité des opérations de plantation et d'entretien des végétaux, création d'espaces verts supplémentaires.

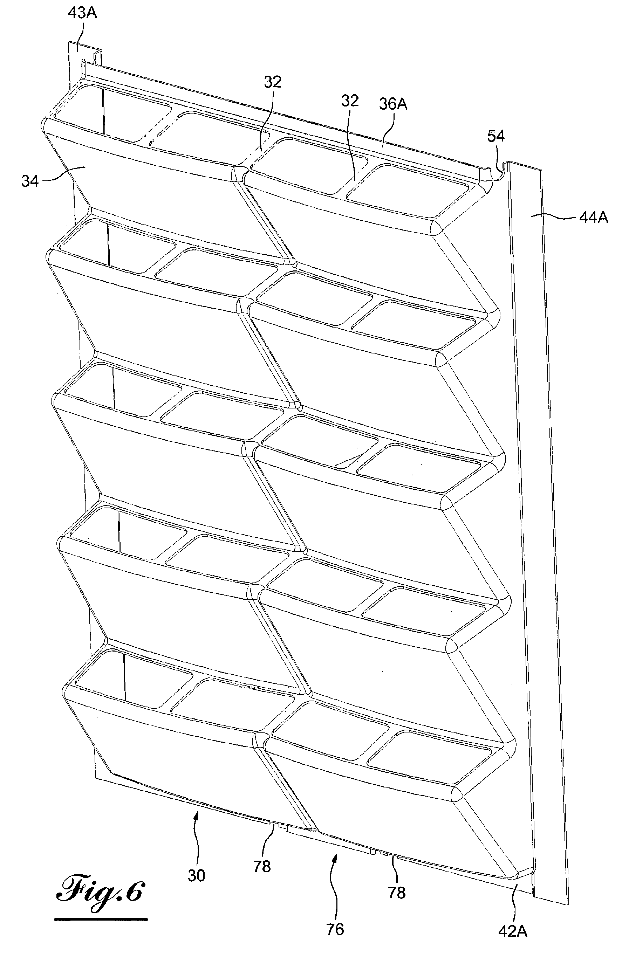

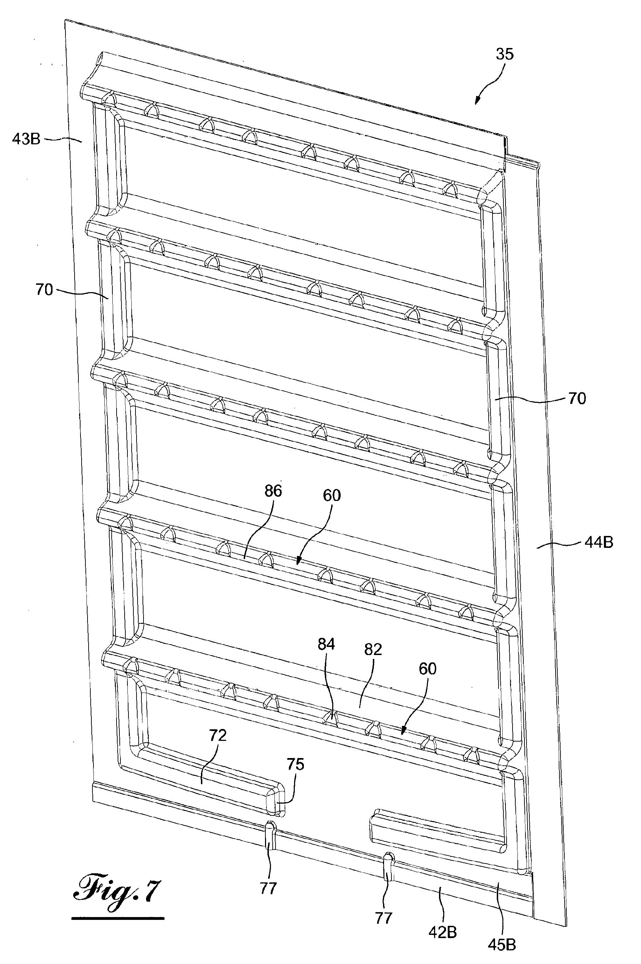

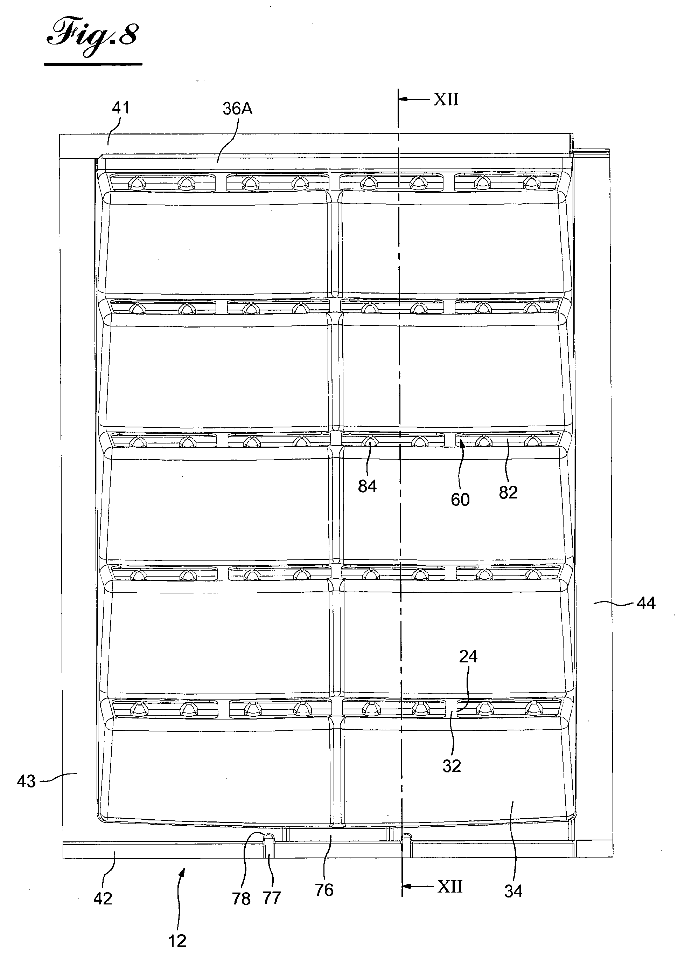

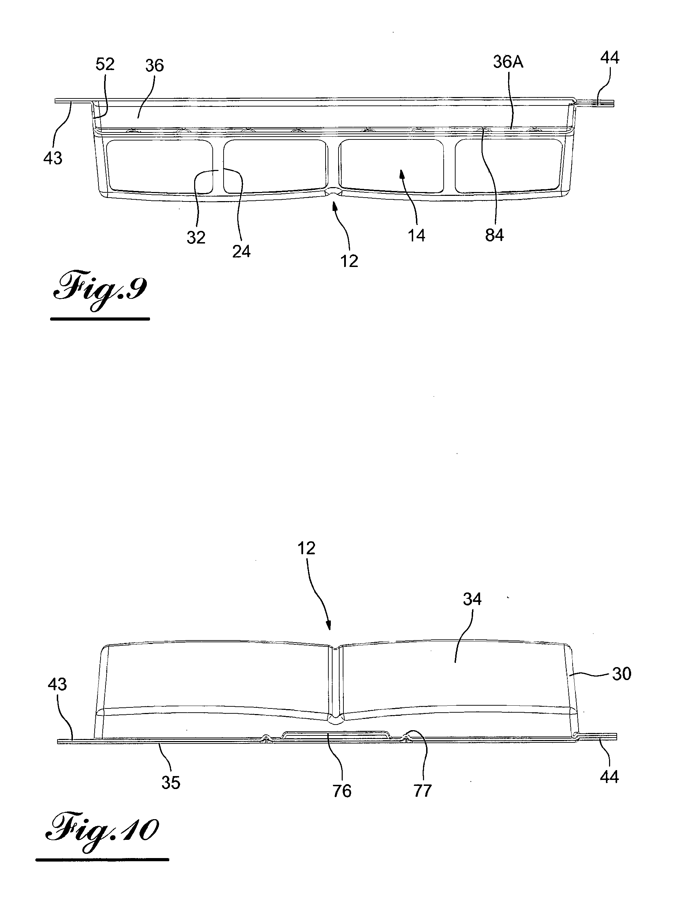

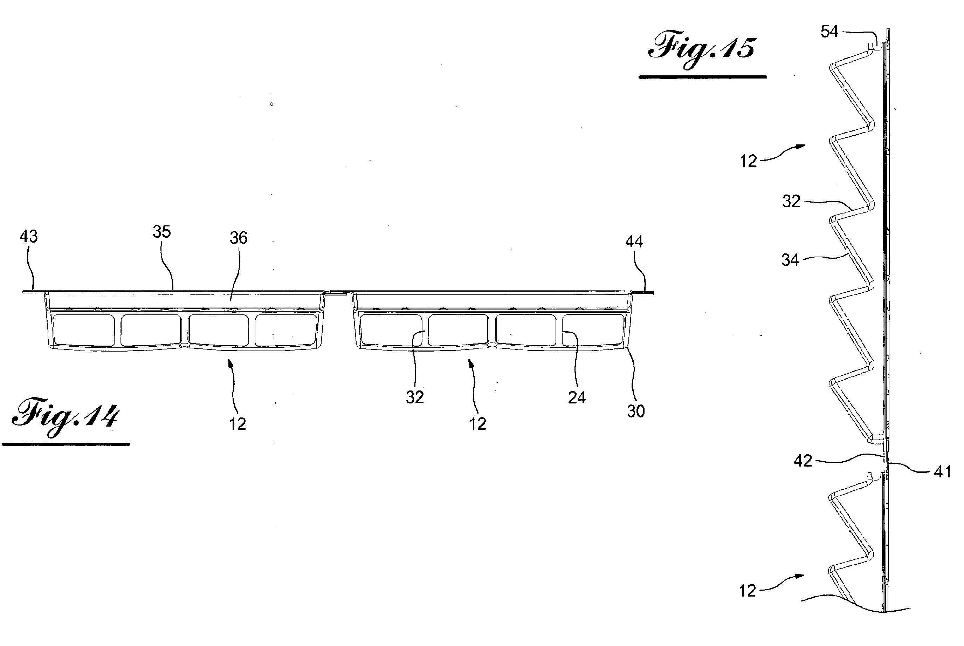

Un deuxième mode de réalisation d'un module selon l'invention, qui est une variante du mode précédemment décrit, est représenté aux figures 6 à 14.

Dans ce mode de réalisation, les modules sont de dimensions différentes, à savoir 1 mètre de hauteur pour 80 centimètres de longueur. Les ouvertures 24 sont plus grandes et au nombre de quatre par rangée, toujours divisée en deux groupes, pour autoriser un plus grand espacement des bottes de végétaux.

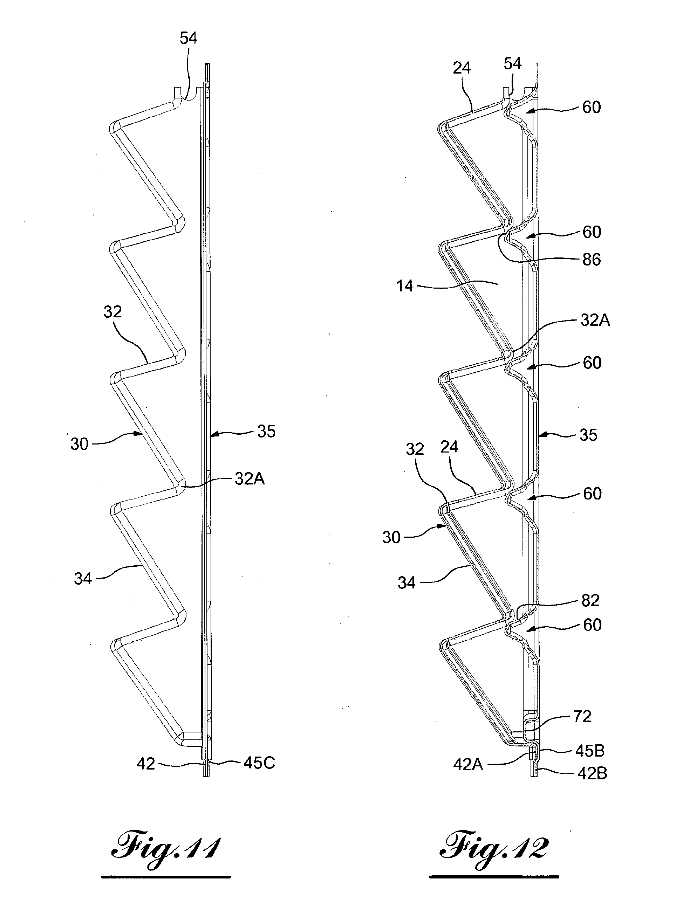

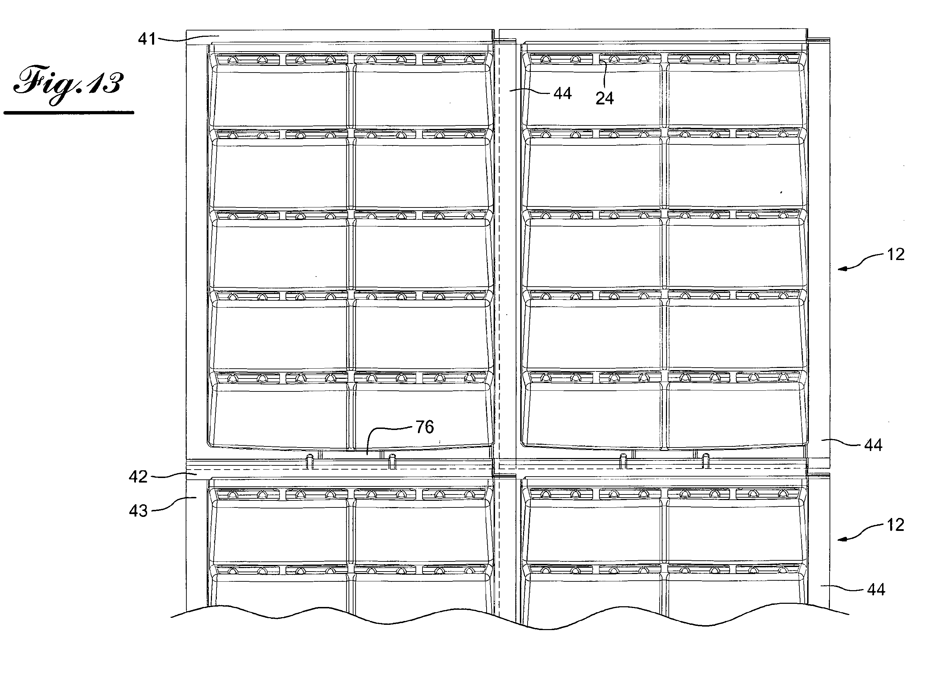

Les ergots de butée ne sont pas présents, mais la butée s'effectue par la butée éventuelle des bords supérieurs 41 sur le décrochement résultant du décalage 45C (figure 11) entre le bord inférieur 42B et la face arrière de la paroi arrière 35 au niveau de l'espace 45B situé entre le bord inférieur 42B et la bordure horizontale interne 72. L'assemblage des bords est conservé tel quel, en étant bien visible aux figures 13 à 15.

Les différences concernent principalement les nervures de cloisonnement 60.

Chaque nervure de cloisonnement 60, en haut et en bas des étages, comporte une section sensiblement triangulaire. Elle comporte une face supérieure 82 inclinée vers l'avant et vers le bas, par exemple à trente degrés. Cette face supérieure 82 comporte des échancrures 84 servant de canal de passage d'eau entre deux rangées 22 de végétaux 16 dans le module 12 ou entre la fente d'entrée d'eau 36 vers le volume interne 14. Entre les échancrures 84, l'arête d'extrémité avant 86 de la nervure 60 est fixée, par exemple par soudage laser, à l'arête d'extrémité arrière 32A de chaque partie sensiblement horizontale 32 de la paroi avant, comme cela est représenté sur la figure 12.

Une seule entaille 75 et une seule entaille 76 sont aménagées à mi longueur du module. La colonne centrale est supprimée puisque les nervures de cloisonnement 60 sont plus longues et renforcent toute la longueur du module.

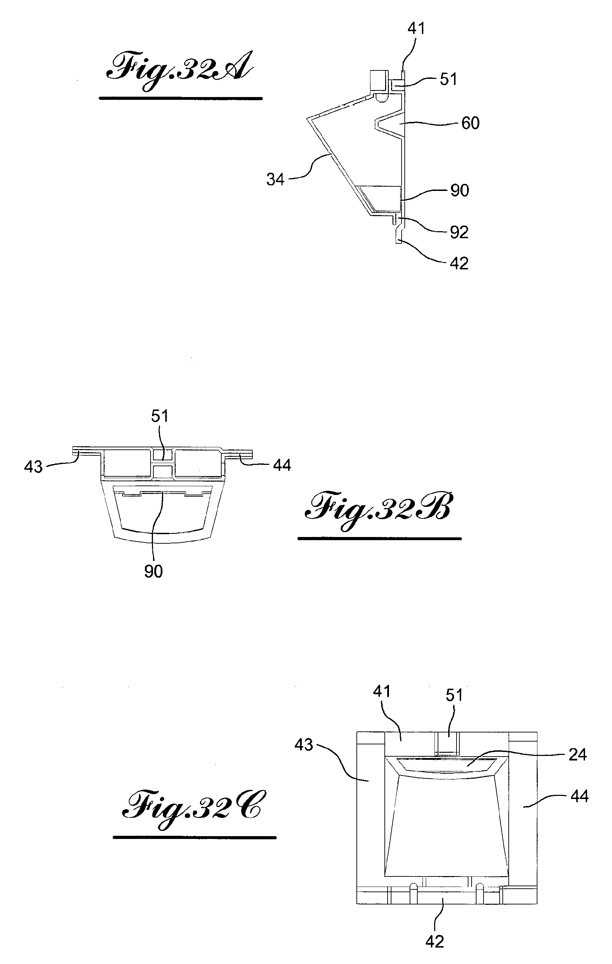

Une première variante de ce deuxième mode de réalisation de l'invention est représentée sur les figures 32A à 32C. Cette variante concerne au principal la position de la nervure de cloisonnement 60.

Afin d'assurer à chaque rangée de végétaux une meilleure répartition de l'eau d'arrosage, l'eau venant du tube d'arrosage 50 ou de la rangée 22 supérieure est dirigée vers le haut des mottes de végétaux par une nervure 60 située légèrement, c'est-à-dire environ 1 à 3 cm, en-dessous du bord inférieur des ouvertures 24 de chaque rangée 22.

Cette variante concerne par ailleurs la présence d'un plot 51 en haut du module. Le plot 51 est disposé de façon à pouvoir maintenir en place le tube d'arrosage 50, avantageusement mais non nécessairement avec une déviation vers le bas, et de former en même temps un moyen par lequel le module peut être saisi pour toute manutention de celui-ci.

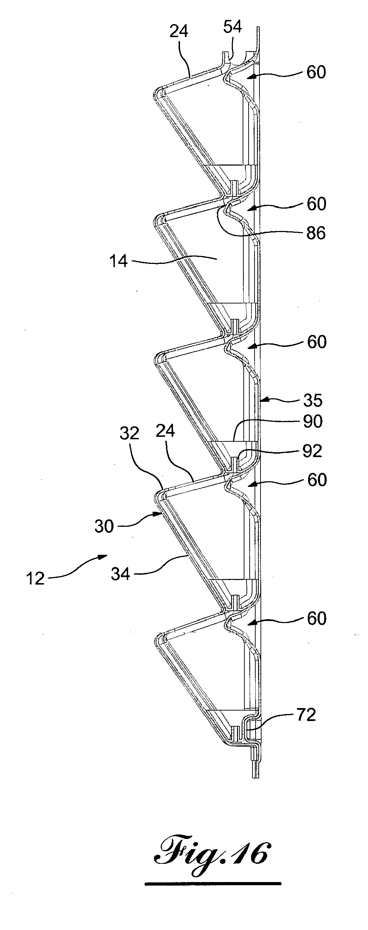

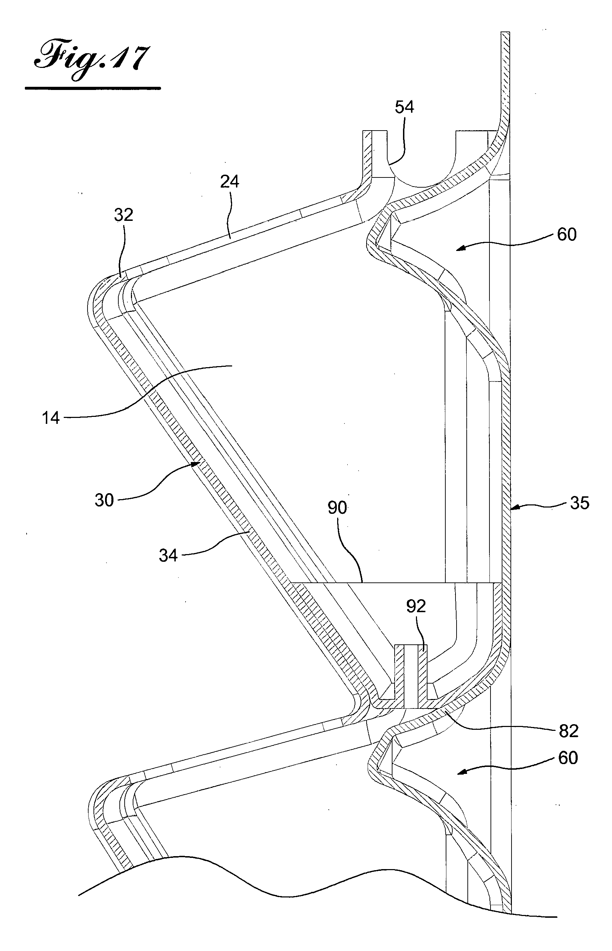

Une deuxième variante du deuxième mode de réalisation de module selon l'invention est représentée aux figures 16 à 17.

Dans cette variante, des réserves d'eau 90 sont disposées au fond de chaque rangée 22 en appui d'une part sur la face interne des parties inclinées 34 et d'autre part sur la face supérieure 82 des nervures de cloisonnement 60 ou sur la bordure interne horizontale 72. Ces réserves d'eau sont formées avec un tube de trop plein 92 permettant tant de garder de l'eau dans la réserve 90 que d'autoriser une évacuation d'eau quand ladite réserve est suffisamment pleine.

Cette variante du deuxième mode de réalisation est particulièrement adaptée aux pays chauds, dans lesquels l'eau est nécessaire en plus grande quantité et ne risque pas de geler dans la réserve 90.

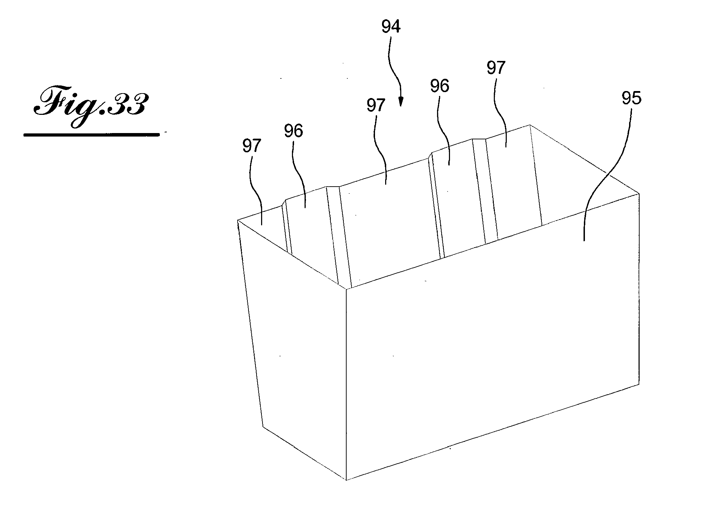

Selon une troisième variante du deuxième mode de réalisation de l'invention, la réserve d'eau est constituée par un réservoir amovible 94 représenté sur la figure 33. Le réservoir 94 est un bac allongé ayant des dimensions extérieures adaptées aux dimensions intérieures du bas des rangées 22 et présentant une paroi avant inclinée 95 et une paroi arrière inclinée 96, ces deux parois étant en contact avec les parois avant et arrière du module. La paroi arrière 96 est formée avec des décrochements 97 assurant un dégagement pour de l'eau excédante.

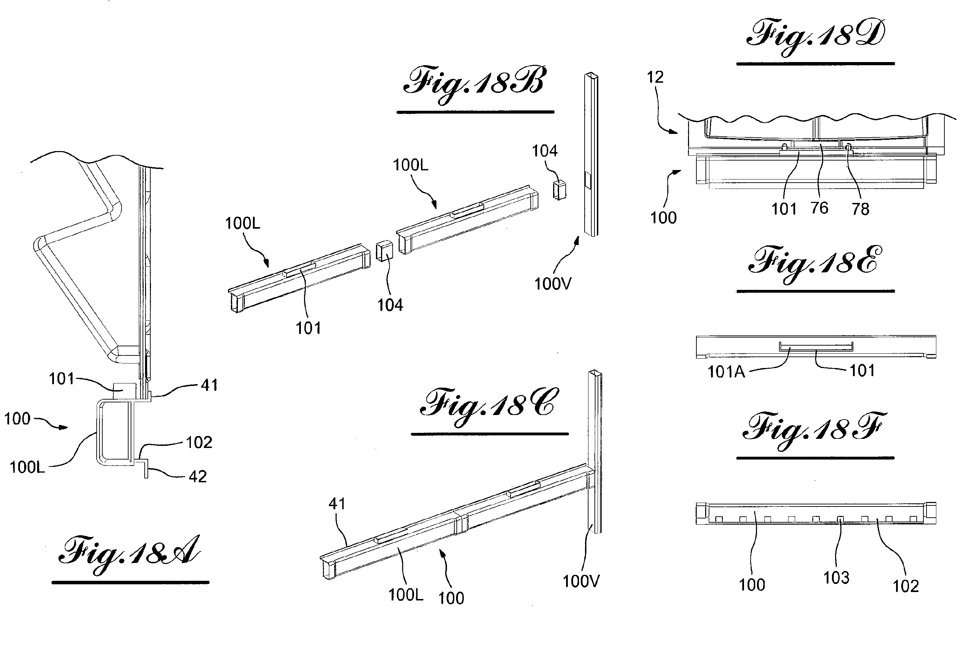

Aux figures 18A à 18F, une gouttière 100 est prévue pour être installée entre deux modules 12 verticalement adjacents. Cette gouttière 100 comporte aussi un bord supérieur 41 et un bord inférieur 42 de chevauchement, sur le même principe que les bords de chevauchement des modules 12. L'eau s'écoulant par les entailles 75 et 76 est récupérée par les gouttières 100 pour être envoyée par des conduites verticales d'évacuation 100V vers par exemple un réservoir permettant d'alimenter en eau le dispositif selon l'invention.

Chaque gouttière 100 comporte une conduite horizontale 100L pourvue d'un rebord de guidage d'eau 101 qui est ouvert en regard du bord supérieur 41 et d'une entaille 76, en étant plus long que cette dernière et que la distance séparant les découpes 78, et qui entoure trois côtés d'une saignée d'entrée d'eau 101A.

Au montage, par exemple en usine, avant montage le long d'un mur, le bord inférieur 42 du module adjacent vers le haut est inséré entre le bord supérieur 41 de la 100 et son rebord de guidage 101, ce dernier étant en regard des entailles 75 et 76 dudit module 12. Ainsi, l'eau peut ruisseler des entailles 75 et 76 vers la saignée 101A, sans déborder sur les côtés.

Avantageusement, entre le rebord 42 de la gouttière et de bord inférieur 42 de cette dernière, une paroi horizontale arrière 102 de la gouttière, représentée aux figures 18A et 18F, comporte des trous d'aération 103 constituant des passages d'air entre l'extérieur et l'arrière du dispositif, pour éviter la condensation entre le dispositif et le bâtiment qui le supporte.

Les conduites horizontales 100L et les conduites verticales d'évacuation 100V sont raccordées par des manchons d'accouplement 104, comme il ressort des figures 18B et 18C.

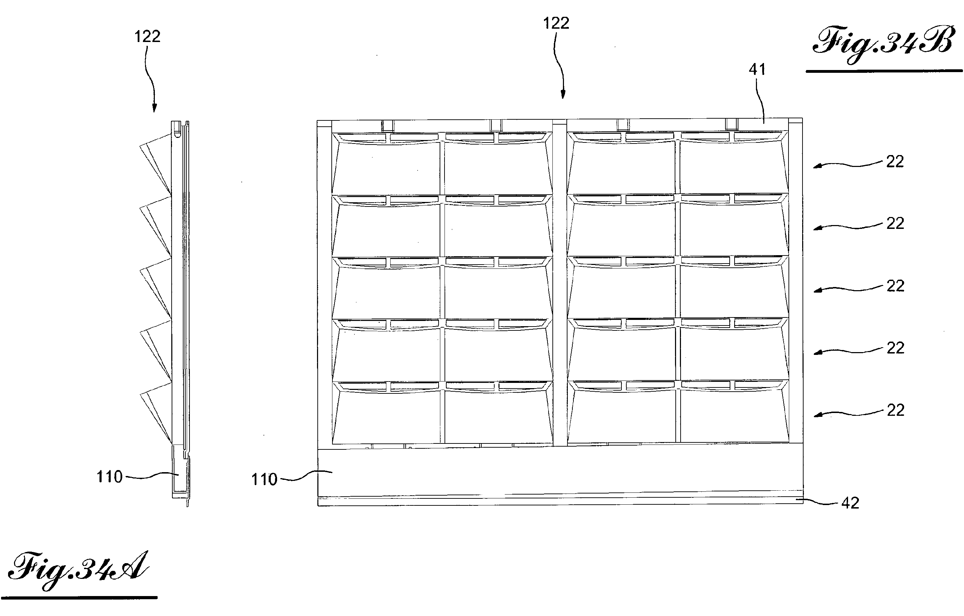

Selon une variante représentée sur les figures 34A, 34B, la gouttière - référencée 110 - est intégrée au jeu de chevauchement du module 122 par un étagement approprié de la paroi avant. La gouttière 110 est formée avec une pente pour l'écoulement de l'eau vers un côté du module. Dans l'exemple de la figure 34B, l'eau s'écoule vers le côté gauche du module 122.

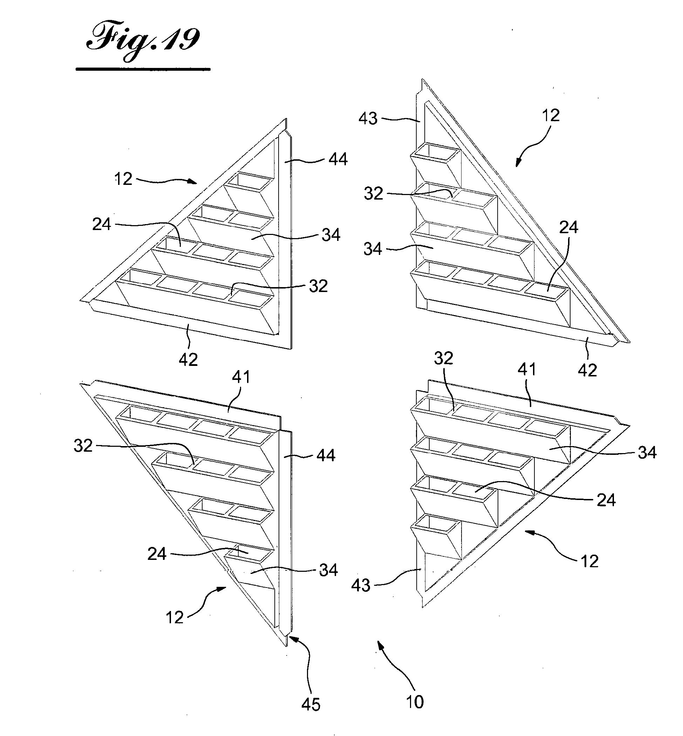

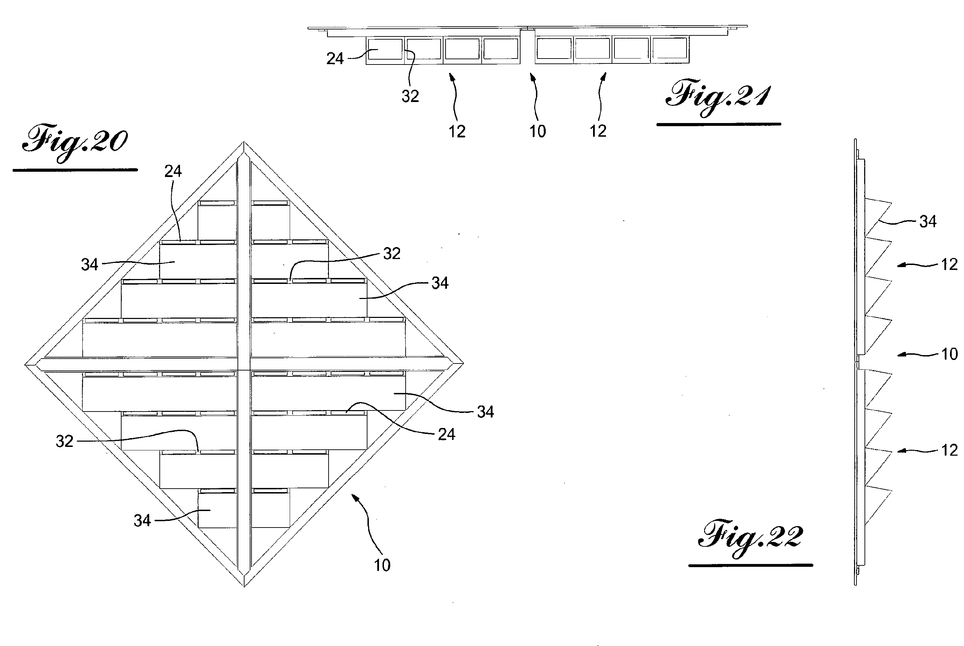

Dans un troisième mode de réalisation représenté aux figures 19 à 22, les modules sont de forme générale triangulaires au lieu de rectangulaires, afin d'être positionnés en losange sur un mur, en élément décoratif et isolant thermiquement qui recouvre partiellement une façade. Les rangées de végétaux sont adaptées à la forme des modules. Les chevauchements des parois verticales et horizontales sont réalisés selon le même principe qu'expliqué précédemment, avec les bords de chevauchement se recouvrant par des décrochements 45 judicieux.

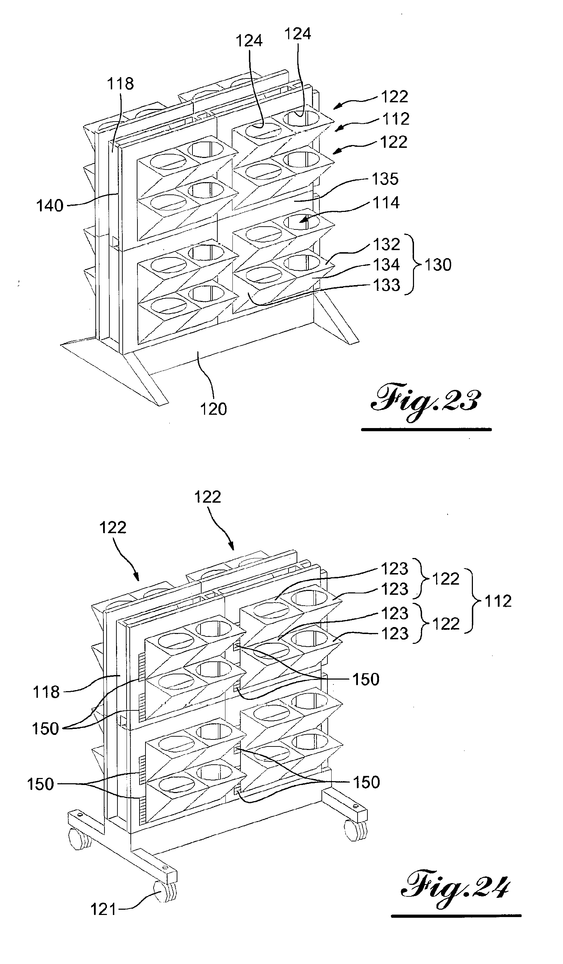

Les figures 23 à 27 montrent un mode de réalisation du dispositif de l'invention principalement destiné à une utilisation intérieure, par exemple pour diviser un grand espace en plusieurs places de travail et obtenir ainsi un « bureau paysagé ».

Le dispositif de l'invention comprend une pluralité de modules 112 fixés sur des supports verticaux 118 solidaires d'un socle 120 éventuellement monté sur des roues 121 pour être déplaçable.

Chaque module 112 comprend deux rangées horizontales 122 de deux compartiments 123 reliés entre eux. Chaque compartiment 123 comprend cependant sa propre ouverture 124 pour la mise en place d'un substrat et de végétaux.

Ainsi, le dispositif représenté sur les figures 23 et 24 comprend, sur chaque côté des supports 118, quatre modules 112 ayant chacun quatre compartiments 123 pour recevoir des végétaux.

Il va sans dire que la conception représentée sur les dessins n'est aucunement limitative en ce qui concerne le nombre de rangées et, pour chaque rangée, le nombre de compartiments. Ainsi, chaque rangée peut comprendre aussi bien un seul compartiment 123 qu'elle peut comprendre deux, trois, quatre ou encore davantage de compartiments 123. L'exemple de réalisation de deux rangées à deux compartiments est entièrement arbitraire mais pourrait constituer une solution pratique selon les dimensions déterminées pour les modules. En effet, le nombre de rangées et de compartiments dépendra non seulement des besoins de combinaison des modules pour un espace donné mais aussi du poids de chaque module et donc de la maniabilité de ces modules par les ouvriers, qui est généralement plus limitée à l'intérieur d'un bâtiment qu'en plein air.

Chaque rangée 123 comprend un volume 114 délimité par une paroi avant 130 et une paroi arrière 135 solidaire de la paroi avant 130. La paroi avant 130 comprend une partie sensiblement horizontale 132 pourvue des ouvertures 124, une partie inclinée vers le bas et vers l'arrière 134 donnant au volume 114 une section sensiblement triangulaire et deux parois latérales 133, respectivement droite et gauche. Chaque partie sensiblement horizontale peut être réalisée avec une inclinaison vers l'avant déterminée entre 0° et environ 10°, selon des contraintes de fabrication, des critères esthétiques ou encore d'autres motifs. Comme pour le premier mode de réalisation, cette légère inclinaison permet d'éviter des rétentions d'eau et de feuilles mortes sur le pourtour des ouvertures 124.

Les parois 130 et 135 peuvent être réalisées indépendamment l'une de l'autre et assemblées ensuite de manière étanche, par exemple par collage, et présentant une zone 140 pour la fixation du module sur les supports 118. Toutefois, notamment selon la matière en laquelle les modules sont réalisés, les modules peuvent aussi être formés en une seule pièce, les parois avant et arrière étant alors solidaires l'une de l'autre par formage. Pour faciliter la vérification de l'humidité du substrat qui remplit le volume 114, une jauge 150 (voir figure 24) peut être prévue.

Le dispositif selon le présent mode de réalisation étant prévu pour un arrosage manuel, aucune entrée n'est prévue pour l'eau d'arrosage et de l'engrais. L'eau d'arrosage, comprenant le cas échéant de l'engrais ou additifs nutritifs, est introduite dans le volume 114 par les ouvertures 124. Toutefois, pour des applications particulières, des ouvertures pour l'introduction d'eau d'arrosage peuvent être prévues, par exemple sur la partie horizontale 132 de la paroi avant 130.

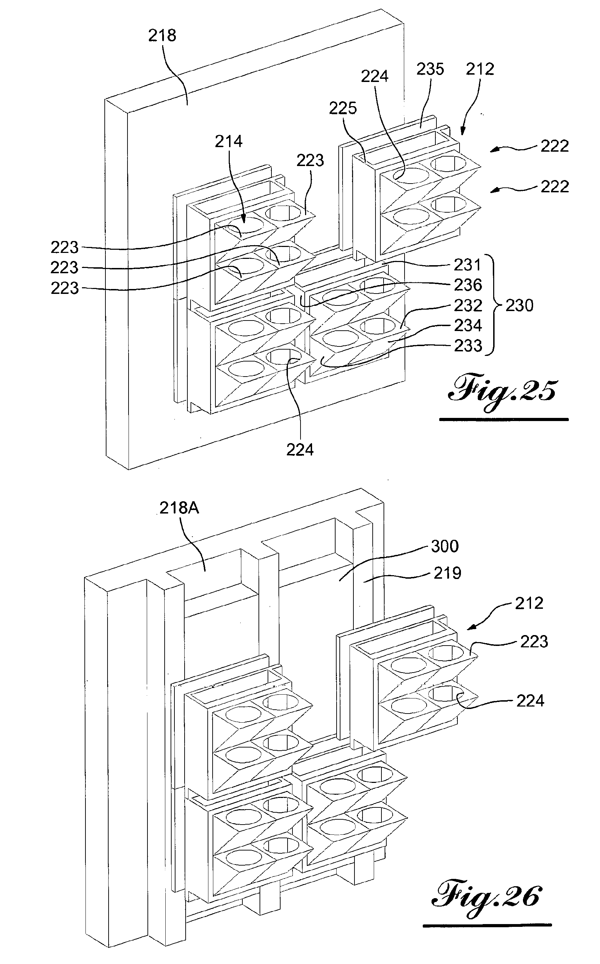

Ainsi, selon la variante de réalisation du dispositif de l'invention, représentée sur les figures 25 à 27, le dispositif comprend, montés sur un support 218, quatre modules 212 ayant chacun quatre compartiments 223 disposés en deux rangées horizontales 222, pour recevoir des végétaux. Les modules 212 sont formés chacun en une seule pièce, mais ils peuvent tout aussi bien être réalisés en plusieurs pièces, par exemple en une paroi avant et une paroi arrière, formées séparément et ensuite assemblés.

Chaque rangée 222 comprend un volume 214 délimité par une paroi avant 230 et une paroi arrière 235 solidaire de la paroi avant 230. La paroi avant 230 comprend une partie sensiblement horizontale 232 pourvue d'ouvertures 224 pour les végétaux et prolongée vers l'arrière par une partie 231 pourvue d'une ouverture 225 pour la mise en place du substrat et l'arrosage, une partie inclinée vers le bas et vers l'arrière 234 donnant au volume 214 une section sensiblement trapézoïdale et deux parois latérales 233, respectivement droite et gauche, prolongées vers l'arrière par deux parties 236. Chaque partie sensiblement horizontale 232 peut être réalisée avec une inclinaison vers l'avant déterminée entre 0° et environ 10°, selon des contraintes de fabrication, des critères esthétiques ou encore d'autres motifs. Comme pour le premier mode de réalisation, cette légère inclinaison permet d'éviter des rétentions d'eau et de feuilles mortes sur le pourtour des ouvertures 224.

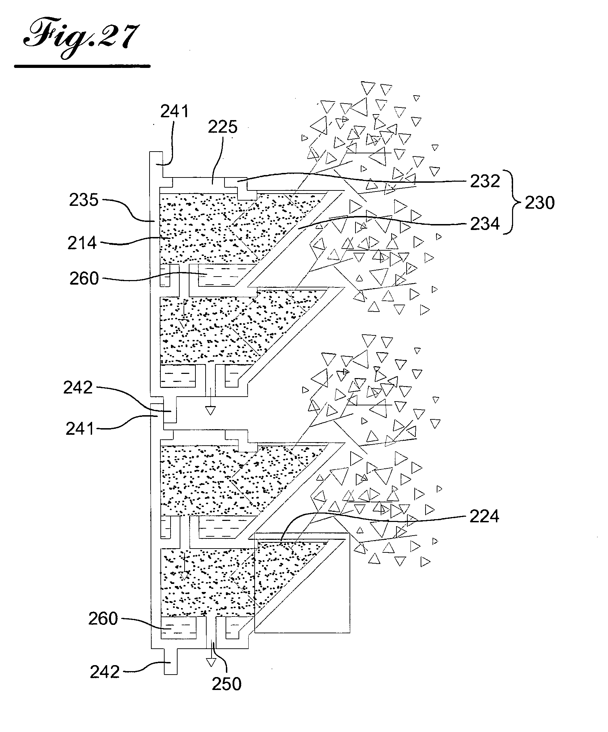

Comme cela est visible sur la figure 27, chaque rangée 223 est formée avec une évacuation d'eau 250. Les sorties d'eau de ces évacuations d'eau sont disposées de façon que l'eau sortant d'une rangée rentre dans la rangée disposée en dessous, et cela jusqu'à la dernière rangée, c'est-à-dire la rangée disposée la plus proche du sol. Il sera alors nécessaire de prévoir en dessous de cette rangée une gouttière permettant d'évacuer l'eau vers un lieu de collecte ou de prévoir tout autre moyen pour collecter et évacuer l'eau ou pour faire réintroduire l'eau dans la rangée la plus haute.

Comme cela est également visible sur la figure 27, chacune des rangées 223 est avantageusement pourvue d'une réserve 260 pour l'eau d'arrosage ce qui permet d'effectuer l'arrosage dans des intervalles de temps plus espacées. Dans ce cas, l'évacuation d'eau de la rangée 223 prend la forme d'un trop plein 250.

La figure 27 montre par ailleurs aussi que les parois avant 230 et arrière 235 sont aménagées à leurs bords respectifs supérieur et inférieur de façon que, lorsque l'on monte deux modules l'un au-dessus de l'autre, le bord inférieur du module supérieur recouvre le bord supérieur du module inférieur.

Sur le plan pratique, tel que représenté sur la figure 27, la paroi arrière 235 comprend un bord supérieur 241 formé dans le même plan que celui défini par la paroi 235 et la paroi avant 230 comprend un bord inférieur 242 formé dans un plan parallèle et en avant par rapport à un plan d'assemblage des parois avant et arrière.

Il va sans dire que cette conception est valable, de manière analogue, lorsque les modules ou pour le moins les rangées sont réalisés en une seule pièce.

Bien que la figure 27 représente le module 212 avec deux rangées 223 reliées entre elles par au moins une évacuation d'eau, il va sans dire que, lorsqu'un module 212 ne comprend qu'une seule rangée 223, l'évacuation d'eau peut être conçue et disposée sur le module de façon que l'eau ne sorte pas nécessairement par le fond de la rangée mais, par exemple, par une ouverture formée dans la partie 236 de l'une des parois latérales 233.

Alors que la figure 25 représente le dispositif de l'invention avec quatre modules 212 montés sur un support plan 218, la figure 26 représente le même dispositif monté sur un support 218A conformé pour recevoir du matériau d'isolation.

En effet, le support 218A est formé, comme le support 218, comme un corps parallélépipédique ou un panneau épais, comparé à l'épaisseur des parois du dispositif 212. Le support 218A comprend en plus, par opposition au support 218, trois nervures 219 pour la fixation du dispositif à une distance du support. L'espace ainsi créé entre la paroi arrière 235 du module 212 et le support 218A permet de loger entre le support et le dispositif un panneau de matériau thermiquement et/ou phoniquement isolant 300.

Sur le plan pratique, lorsque le support est par exemple un mur à décorer, les nervures sont des rails, des tasseaux ou tout autre élément approprié permettant de monter les modules du dispositif selon l'invention à une distance du mur. Les rails etc. peuvent servir en même temps pour la fixation du matériau isolant.

Alors que la plupart des exemples de réalisation du dispositif de l'invention décrits plus haut et représentés dans les dessins concernent l'application de l'invention à une surface telle un mur d'une pièce ou une façade d'un bâtiment, le dispositif représenté sur les figures 23 et 24 est conçu de façon à pouvoir servir comme séparation fixe ou mobile d'espaces avec des végétaux sur les deux côtés du dispositif. A cette fin, le dispositif comprend, sur chaque côté des supports 118, quatre modules 112 ayant chacun quatre compartiments 123 pour recevoir des végétaux.

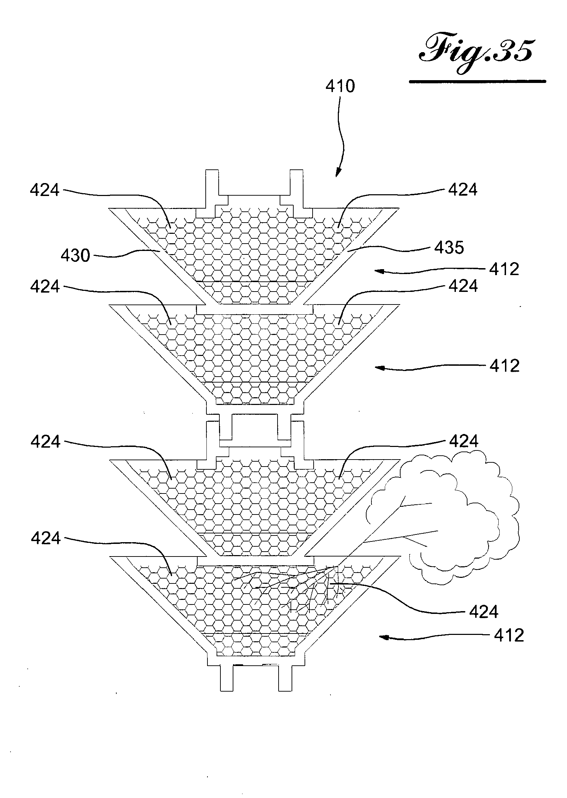

Selon une variante représentée sur la figure 35, le dispositif est réalisé de façon à pouvoir servir comme séparation fixe ou mobile d'espaces avec des végétaux sur les deux côtés du dispositif mais sans support entre les deux côtés. Le dispositif, référencé 410, comprend quatre modules 412 superposés ayant chacun sur chacun des deux côtés opposés, formés par une paroi avant 430 et une paroi arrière 435, une rangée d'ouvertures 424 par lesquelles des végétaux peuvent être introduits et plantés dans le module. Ainsi, chacune des deux parois peut être considérée indifféremment comme paroi avant ou paroi arrière. Par ailleurs, les modules 412 peuvent être conçus sans ou avec un trop plein.

Le dispositif selon la présente invention est conçu de façon modulaire. Ainsi, il est possible de couvrir des surfaces de toutes dimensions et avec des géométries variables. A cette fin, les modules sont formés de façon à pouvoir être assemblés les uns avec les autres en chevauchement de leurs bords correspondants supérieurs, inférieurs et latéraux lorsqu'ils recouvrent ou forment une surface plane.

Cependant, lorsque le dispositif de l'invention est utilisé comme séparateur d'espaces et que la séparation ne se fait pas, ou pas entièrement, suivant une ligne droite, les modules ou des ensembles de modules doivent néanmoins pouvoir être reliés entre eux.

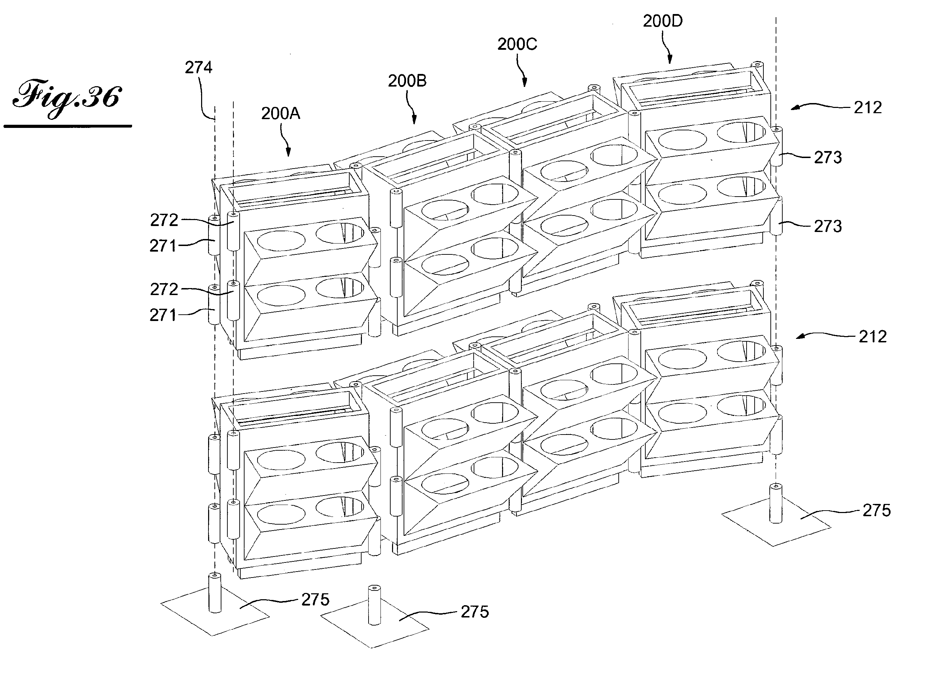

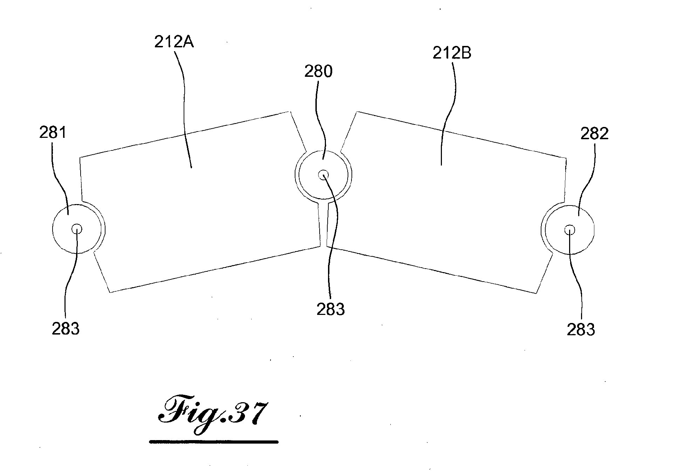

La liaison entre les modules ou des ensembles de modules est alors réalisée par des éléments d'articulation dont les figures 36 et 37 ne montrent que deux exemples de réalisation.

Selon l'exemple de la figure 36, quatre ensembles 200A à 200D comprenant chacun deux modules superposés 212 sont reliés entre eux par des charnières dont chacune est formée par quatre tubes solidaires de chaque côté latérale des modules et par une tige 274 traversant les tubes. Ainsi, chaque ensemble de modules comprend du côté gauche deux tubes arrière 271 et deux tubes avant 272 et du côté droit deux tubes arrière non représentés et donc sans référence et deux tubes avant 273. Les tubes du côté gauche et les tubes du côté droit sont disposés décalés en hauteur les uns par rapport aux autres de manière à pouvoir former des charnières comme expliqué ci-après. En disposant avantageusement mais nullement nécessairement les tubes arrière gauche 271 verticalement décalés par rapport aux tubes avant gauche 272 et, de manière analogue mais inversement décalé, les tubes arrière droit par rapport aux tubes avant droit 273, les ensembles de modules sont réversibles en ce qui concerne leur attachement. La tige 274 est solidaire d'une platine 275 formant un support pour le dispositif.

La sélection des tubes 271 à 273 à relier entre eux est faite selon le sens de l'articulation à réaliser. Selon l'exemple représenté, l'ensemble 200A est relié à l'ensemble 200B par des charnières formées par les tubes arrière sans référence (car non représentés) du côté droit de l'ensemble 200A et les tubes arrière 271 du côté gauche de l'ensemble 200B pour former un angle d'ouverture vers l'arrière du dispositif. Les ensembles 200B et 200C sont reliés entre eux aussi bien par les tubes arrière que par les tubes avant pour être maintenus alignés l'un sur l'autre. Et l'ensemble 200C est relié à l'ensemble 200D par les tubes avant 273 du côté droit de l'ensemble 200C et les tubes avant 272 du côté gauche de l'ensemble 200D pour former un angle d'ouverture vers l'avant du dispositif.

L'exemple représenté sur la figure 37 diffère de celui de la figure 36 dans la mesure où les tubes formant les charnières sont disposés au milieu des faces latérales des ensembles ou modules 212A, 212B. Ainsi, les modules 212A et 212B sont pourvus sur leur côté gauche d'un tube 281 et sur leur côté droit d'un tube 282. Les tubes 281 et 282 sont disposés à des niveaux différents afin de pouvoir être assemblés pour former des charnières. Lorsque l'ensemble 212A est relié à l'ensemble 212B, le tube 282 de l'ensemble 212A et le tube 281 de l'ensemble 212B forment la charnière 280 ensemble avec une tige 283 qui traverse les deux tubes.

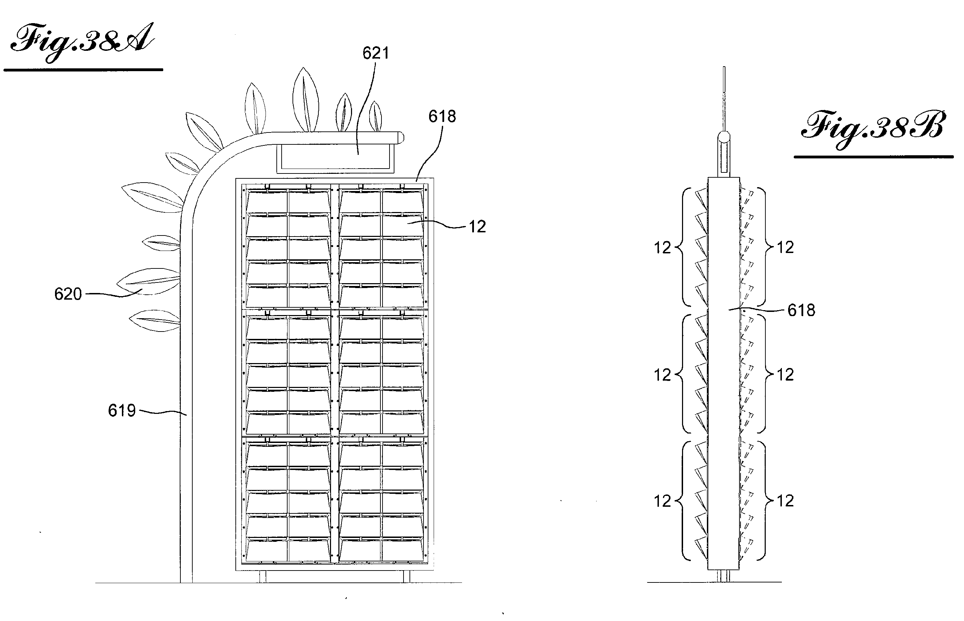

Les figures 38A, 38B représentent, en tant que dernier mode de réalisation de l'invention, un agencement décoratif faisant par exemple partie de mobilier urbain et destiné à être placé par exemple à l'entrée d'une ville ou d'un parc.

L'agencement décoratif comprend un dispositif de l'invention avec des modules 12 montés sur une ossature métallique ayant un cadre 618 scellé dans le sol. L'agencement décoratif est complété par un mât 619 disposé à côté du dispositif de l'invention et porteur de feuilles 620 et d'un panneau 621 indiquant le nom de la ville ou du parc. Comme la figure 38B l'indique, le dispositif de l'invention peut comprendre des modules 12 sur un côté ou sur les deux côtés de l'ossature 618.

## Revendications

1. Dispositif (10) pour un agencement vertical ou incliné de culture hors sol de végétaux (16), comprenant au moins un module (12) déterminant un volume interne (14) destiné à recevoir au moins un substrat nutritif et des végétaux et délimité par une paroi avant (30) et une paroi arrière (35) solidaire de la paroi avant (30), au moins la paroi avant (30) étant pourvue d'au moins une ouverture (24) pour le passage des végétaux et au moins l'une des parois avant (30) et arrière (35) comportant une zone de fixation (43, 44) prévue pour la fixation du module (12) à un support (18, 118), **caractérisé en ce qu'**au moins l'une parmi la paroi avant (30) et la paroi arrière (35) comporte des bords de chevauchement (41, 42, 43, 44) permettant, lorsque le dispositif est installé en toiture végétale ou en mur végétal comportant au moins deux modules (12) adjacents, que les modules se chevauchent au moins partiellement dans la toiture ou le mur.

2. Dispositif selon la revendication 1, **caractérisé en ce que** la paroi arrière (35) comporte des butées verticales (41A) en saillie vers l'avant pour permettre l'appui d'un bord inférieur (42) d'un module (12) disposé adjacent vers le haut.

3. Dispositif selon la revendication 1 ou 2, **caractérisé en ce que** la paroi arrière (35) comporte une nervure de cloisonnement (60) sensiblement horizontale, en saillie dans le volume interne (14).

4. Dispositif selon la revendication 3, **caractérisé en ce que** la nervure de cloisonnement (60) est disposée légèrement en-dessous du bord inférieur de l'ouverture (24).

5. Dispositif selon l'une quelconque des revendications 1 à 4, **caractérisé en ce qu'**il comporte une évacuation d'eau (75, 76) débouchant à une partie inférieure du volume interne.

6. Dispositif selon la revendication 5, **caractérisé en ce que** l'évacuation d'eau (75, 76) se prolonge dans le bord inférieur (42) du module (12), le bord inférieur (42) comportant à cet effet au moins une entaille avant (76).

7. Dispositif selon la revendication 5 ou 6, **caractérisé en ce qu'**il comporte une gouttière (100) pour la récupération d'eau passant par l'évacuation d'eau (75, 76).

8. Dispositif selon la revendication 7, **caractérisé en ce que** la gouttière (100) est intégrée dans le bord inférieur (42) par un étagement approprié du bord inférieur (42) de la paroi avant (30).

9. Dispositif selon l'une quelconque des revendications 1 à 8, **caractérisé en ce qu'**il comporte une ouverture d'entrée d'eau (36) entre la paroi avant (30) et la paroi arrière (35).

10. Dispositif selon l'une quelconque des revendications 1 à 9, **caractérisé en ce qu'**il comporte une réserve d'eau (90) disposée entre la paroi avant (30) et la paroi arrière (35).

11. Dispositif selon la revendication 10, **caractérisé en ce que** la réserve d'eau est constitué par un réservoir amovible (94).

12. Dispositif selon l'une quelconque des revendications 1 à 11, avec un support (118) étant déplaçable, **caractérisé en ce que** le dispositif est pourvu de moyens de liaisons latéraux (271, 272, 273) adaptés pour pouvoir former des liaisons articulées, lorsque deux modules (12) ou ensembles de modules sont assemblés horizontalement.

## Patentansprüche

1. Vorrichtung (10) zur vertikalen oder winkeligen Anordnung von Hydrokulturpflanzen (16), die mindestens ein Modul (12) umfasst, das ein Innenvolumen (14) bestimmt, das dazu bestimmt ist, mindestens ein Nährsubstrat und Pflanzen aufzunehmen und von einer vorderen Wand (30) und einer mit der vorderen Wand (30) verbundenen hintere Wand (35) begrenzt ist, wobei mindestens die vordere Wand (30) mit mindestens einer Öffnung (24) für den Durchgang der Pflanzen ausgestattet ist und mindestens eine der vorderen (30) und hinteren Wand (35) eine Befestigungszone (43, 44) aufweist, die für die Befestigung des Moduls (12) an einem Halter (18, 118) vorgesehen ist, **dadurch gekennzeichnet, dass** mindestens eine von der vorderen Wand (30) und der hinteren Wand (35) Überlappungsränder (41, 42, 43, 44) aufweist, die erlauben, wenn die Vorrichtung als Pflanzendach oder Pflanzenwand aufgestellt ist, die mindestens zwei benachbarte Module (12) aufweist, dass sich die Module mindestens teilweise in dem Dach oder in der Wand überlappen.

2. Vorrichtung nach Anspruch 1, **dadurch gekennzeichnet, dass** die hintere Wand (35) vertikale Anschläge (41A) aufweist, die nach vorn hervorstehen, um die Abstützung eines unteren Rands (42) eines Moduls (12) zu erlauben, das benachbart nach oben angeordnet ist.

3. Vorrichtung nach Anspruch 1 oder 2, **dadurch gekennzeichnet, dass** die hintere Wand (35) eine etwa horizontale Abgrenzungsrippe (60) aufweist, die in das Innenvolumen (14) hineinragt.

4. Vorrichtung nach Anspruch 3, **dadurch gekennzeichnet, dass** die Abgrenzungsrippe (60) etwas unter dem unteren Rand der Öffnung (24) angeordnet ist.

5. Vorrichtung nach einem der Ansprüche 1 bis 4, **dadurch gekennzeichnet, dass** sie eine Wasserableitung (75, 76) aufweist, die in einen unteren Teil des Innenvolumens ausmündet.

6. Vorrichtung nach Anspruch 5, **dadurch gekennzeichnet, dass** sich die Wasserableitung (75, 76) in den unteren Rand (42) des Moduls (12) verlängert, wobei der untere Rand (42) zu diesem Zweck mindestens eine vordere Kerbe (76) aufweist.

7. Vorrichtung nach Anspruch 5 oder 6, **dadurch gekennzeichnet, dass** sie eine Rinne (100) zum Auffangen von Wasser aufweist, das durch die Wasserableitung (75, 76) fließt.

8. Vorrichtung nach Anspruch 7, **dadurch gekennzeichnet, dass** die Rinne (100) durch eine geeignete Abstufung des unteren Rands (42) der vorderen Wand (30) in den unteren Rand (42) integriert ist.

9. Vorrichtung nach einem der Ansprüche 1 bis 8, **dadurch gekennzeichnet, dass** sie zwischen der vorderen Wand (30) und der hinteren Wand (35) eine Wassereingangsöffnung (36) aufweist.

10. Vorrichtung nach einem der Ansprüche 1 bis 9, **dadurch gekennzeichnet, dass** sie ein Wasserreservoir (90) aufweist, das zwischen der vorderen Wand (30) und der hinteren Wand (35) angeordnet ist.

11. Vorrichtung nach Anspruch 10, **dadurch gekennzeichnet, dass** das Wasserreservoir von einem lösbaren Reservoir (94) gebildet wird.

12. Vorrichtung nach einem der Ansprüche 1 bis 11 mit einem Halter (118), der verlagerbar ist, **dadurch gekennzeichnet, dass** die Vorrichtung mit seitlichen Verbindungsmitteln (271, 272, 273) ausgestattet ist, die angepasst sind, um Gelenkverbindungen bilden zu können, wenn zwei Module (12) oder Modulgruppen horizontal verbunden sind.

## Claims

1. A device (10) for a vertical or angled arrangement for the hydroponic cultivation of plants (16), comprising at least one module (12) determining an inner volume (14) designed to receive at least one nutritional substrate and plants, and delimited by a front wall (30) and a back wall (35) secured to the front wall (30), at least the front wall (30) being provided with at least one opening (24) for the passage of the plants and at least one of the front wall (30) and rear wall (35) including a fastening area (43, 44) provided for the fastening of the module (12) to a support (18, 118), **characterized in that** at least one from among the front wall (30) and the back wall (35) includes overlapping edges (41, 42, 43, 44) making it possible, when the device is installed in a plant roof or plant wall including at least two adjacent modules (12), for the modules to overlap at least partially in the roof or wall.

2. The device according to claim 1, **characterized in that** the back wall (35) includes vertical stops (41A) protruding toward the front to allow the upward bearing of a lower edge (42) of a module (12) positioned adjacent thereto.

3. The device according to claim 1 or 2, **characterized in that** the back wall (35) includes a substantially horizontal partitioning rib (60), protruding in the inner volume (14).

4. The device according to claim 3, **characterized in that** the partitioning rib (60) is positioned slightly below the lower edge of the opening (24).

5. The device according to any one of claims 1 to 4, **characterized in that** it includes a water drain (75, 76) emerging in a lower part of the inner volume.

6. The device according to claim 5, **characterized in that** the water drain (75, 76) extends in the lower edge (42) of the module (12), the lower edge (42) to that end including at least one front notch (76).

7. The device according to claim 5 or 6, **characterized in that** it includes a gutter (100) for recovering water passing through the water drain (75, 76).

8. The device according to claim 7, **characterized in that** the gutter (100) is integrated into the lower edge (42) by a suitable stepping of the lower edge (42) of the front wall (30).

9. The device according to any one of claims 1 to 8, **characterized in that** it includes a water intake opening (36) between the front wall (30) and the back wall (35).

10. The device according to any one of claims 1 to 9, **characterized in that** it includes a water reserve (90) positioned between the front wall (30) and the back wall (35).

11. The device according to claim 10, **characterized in that** the water reserve is formed by a removable reservoir (94).

12. The device according to any one of claims 1 to 11, with a movable support (118), **characterized in that** the device is provided with side connecting means (271, 272, 273) suitable for being able to form articulated links, when two modules (12) or sets of modules are assembled horizontally.
